# EUROPEAN PATENT APPLICATION

(11) **EP 3 772 284 A1**
(43) Date of publication of application: **10.02.2021**
(21) Application number: 19190799.7
(22) Date of filing: 08.08.2019
(51) Int. Cl.: A23C 3/037, A23L 2/46, A23L 3/00, A23L 3/24

(54) **AN INFUSION SYSTEM AND A METHOD FOR HEAT TREATMENT OF LIQUID OR SEMILIQUID FOOD PRODUCTS AS WELL AS USE THEREOF**

(71) Applicant: DS TRIPLE A/S, 8600 Silkeborg (DK)
(72) Inventor: Kjærbye, Henrik, 8920 Randers NV (DK); Blegvad Jensen, Rune, 8370 Hadsten (DK); Riis, Claus, 8600 Silkeborg (DK)
(74) Representative: Olesen, Birthe Bjerregaard

(57) **Abstract**

An infusion system and a method for heating a liquid or semi liquid food product is disclosed herein. The system comprises an infusion chamber to which the food product to be heated is supplied in the upper area. The heated food product is discharged in the lower area. The food product to be heated enters the infusion chamber and flows down through the infusion chamber as a freely falling downward flow. Steam is supplied to the upper area of the infusion chamber. The steam is in direct heat exchange with the product steam. The food product is supplied to the infusion chamber as a ring-shaped product flow from a suspended ring-shaped product inlet inside the upper area of the infusion chamber. Steam is introduced into the infusion chamber through a single steam inlet passage which provides steam into the infusion chamber via one or more steam inlet openings in the top wall of the infusion chamber. Said steam inlet opening or openings in the infusion chamber top surrounds the ring-shaped product inlet and are arranged between the suspended ring-shaped product outlet and the outer wall of the infusion chamber. A simple control and reduced costs for the installation is achieved by the combination of a suspended product distribution and a simpler steam distribution system.

## Description

### Field of the Invention

The present invention relates to an infusion system for heat treatment of liquid or semiliquid food products.

The present invention also relates to a method for heat treating liquid or semiliquid food products.

The present invention also relates to the use of the system and/or the method.

### Background of the Invention

In the food and beverage industries it is customary to improve shelf life by subjecting the food or beverage product to heat treatment.

Typically, the heat treatment is a pasteurization, a heat treatment to provide extended-shelf-life (ESL) or UHT (ultra-high temperature) treatment.

Pasteurization is a process in which water and certain packaged and non-packaged liquid foods (such as milk or fruit juice) are treated with mild heat, usually to less than 100 °C, for a period necessary to eliminate pathogens, typically 10-30 seconds or more e.g. up to 1-2 minutes, depending on the product and/or whether enzyme deactivation or microbial deactivation is required. The pasteurization process also extends shelf life of the food products. The process destroys or deactivates enzymes that contribute to spoilage of the product. Pasteurization also destroys or deactivates microorganisms including vegetative bacteria, but not bacterial spores. Thus, the risk of ingesting food containing pathogens is reduced, which also reduces the risk of diseases and/or spreading thereof.

ESL products are the products that have been treated in a manner to reduce the microbial count beyond normal pasteurization, followed by packaging under hygienic conditions. ESL products have a defined prolonged shelf life under refrigeration conditions. At present there is no generally accepted definition of ESL heat treatment. ESL heat treatment to provide ESL products, e.g. ESL-milk, fills the gap between pasteurization and ultra-high temperature treatment (UHT). Extended-shelf-life (ESL) heat treatment on milk is usually applied at 120-135°C for 1-4 seconds to extend shelf life of processed liquid milk products.

UHT treatment is mostly used to sterilize liquid food by heating it above 135 °C for 2 to 5 seconds. UHT is most commonly used in milk production, but the process is also used for fruit juices, cream, soy milk, yogurt, soups, honey or stews in order to kill spores, microorganisms, vira etc. UHT milk can for example be stored for a few months without cooling.

Liquid food products (in the following just "the product"), which undergo such heat treatment, is typically fluid products or semi-fluid products, for example dairy products, fruit and/or vegetable-based products, juice from fruit and/or vegetables, vegetable based milk substitutes, such as milk substitutes based on soy, oat, nuts, almonds and/or mixtures thereof, drinks of any kind, e.g. beer, wine, soft drinks, as well as culinary products such as soups, broth, stews, gravies, dressings, honey, desserts, e.g. puddings, and/or condiments.

Examples of dairy products are liquid dairy products such as milk, cream and/or yoghurt or similar fermented milk or cream based products and/or milk based liquid, whey or liquid or semi liquid food products based on whey or semi liquid desserts.

It is common to use direct heating by steam in an infusion system when heat treating such liquid or semi liquid food products.

In an infusion system the product is led into an infusion chamber where the atmosphere is made up of saturated steam (or steam close to the saturation point) which is maintained at a given pressure and temperature. Saturated steam (or steam close to the saturation point) is fed to the infusion chamber in order to maintain the desired temperature in the infusion chamber, so as to ensure the desired heat transfer to provide pasteurisation, ESL treatment or UHT treatment.

The product is led into the chamber through a nozzle and is heated by the steam condensing into the product, thereby elevating the temperature to the desired level in accordance with a set point.

The product falls through the chamber with limited or no contact with the inside of the chamber while it is being heated by condensing steam (also called the infusion process) and is removed through an outlet placed in the bottom of the infusion chamber

The bottom of the infusion chamber may be equipped with a concentric cooler covering the lower part of the chamber.

During the infusion of the product to be heated, air is liberated from the product. This creates a semi-gaseous atmosphere in the chamber, especially in the top thereof, which makes the infusion chamber less efficient in its function because it decreases the partial pressure of steam in the infusion chamber and thus reduces the heat transfer to the product.

An example of such an infusion system for heat treating liquid dairy products is shown in EP2381793 B. The infusion chamber has two separate steam injection passages and thus has two separately controllable steam flows. The product as well as the steam is introduced into the infusion chamber from a nozzle plate / annular nozzle placed in the very top of the chamber.

Each steam injection passage is provided with a valve controlling the steam flow into the infusion chamber. A first steam injection flow provides steam to the central part of the infusion chamber. This first steam inlet is the main steam inlet. The first main steam inlet is surrounded by a concentric product inlet or nozzle that provides a falling circular flow of product. A second steam inlet is arranged concentrically outside the product flow.

The construction of the top (with the concentric steam flows and product flow) of the infusion chamber is complex and expensive to produce. Further, the known infusion chamber, and in particular the complex construed product and steam infusion top, is expensive to keep in production mode due to time consuming and expensive service or maintenance. Further, the known infusion chamber is complex with respect to controlling steam flow. For example, the two separate steam injection passages for providing steam into the infusion chamber require two separately controlled valves. In addition, there may be increased risk of the product outlet being clogged by coagulated and/or burnt-on product at, near or inside the product outlet. This is because of the close proximity of the product outlet and the first and/or second steam outlets, thus the increased risk of heat-exposure to the product outlet. Further, this may increase the risk of partial clogging of the product outlet which may cause that the liquids are introduced into the infusion chamber as finely divided drops or even an aerosol, which results in that duration of the fall time is out of control with a further increased risk of burnt taste in the product.

Thus, there is still a need for less complex constructions of steam infusion systems for heat treatment of liquid or semi liquid food products.

### Object of the Invention

Thus, it is an object of the present invention to provide a simple and effective construction which is applicable in the heat treatment of liquid or semi liquid food products as well as a method therefore, while also maintaining a high rate of heat transfer from steam to product.

Further, it is an object of the present invention to provide a steam infusion chamber construction which is applicable in the heat treatment of liquid or semi liquid food products as well as a method therefore.

In addition, it is an object of the present invention to provide a steam infusion chamber construction which is simple in its construction and thus less expensive to fabricate, repair and/or maintain in service.

It is also an object of the present invention to provide an effective and simple control of the steam injection into the infusion chamber construction as well as a method therefore.

It is also an object of the present invention to provide an effective steam injection into a steam infusion chamber, which provides a laminar steam flow in the infusion chamber.

It is finally an object of the present invention to provide an effective product and steam injection into a steam infusion chamber, which protects the product from disturbance and atomization; which ensures predictable fall and holding times and/or which reduces the risk of the product having a burnt taste.

### Description of the Invention

These objects are met by an infusion system for heating a liquid or semi liquid food product by direct contact with steam, including an infusion chamber limited by an infusion tank, said infusion chamber having a product inlet for the food product to be heated in its upper area and a product outlet for the heated food product in its lower area, and where said product is provided through ring-shaped product inlet as a ring-shaped product stream falling freely down though the infusion chamber, said infusion system having a steam inlet for the steam heating medium in the upper area, wherein
- said ring-shaped product inlet inside the upper area of the infusion chamber is arranged to be suspended below the upper wall of the infusion chamber,
- said steam inlet is provided as a single steam inlet passage which provides steam into the infusion chamber via one or more steam inlet openings in the tank top or side of the outer wall of the infusion chamber above and/or around the ring-shaped product outlet of the infusion chamber, and said steam inlet opening or openings in the infusion chamber top surrounds the ring-shaped product inlet and are arranged between the ring-shaped product outlet and the outer wall of the infusion chamber.

This construction provides a simplified steam addition system because it is only necessary to use a single common feed for steam flow for introducing steam into the infusion chamber. This reduces production costs significantly. Further, less parts needs service, repair or maintenance whereby the running costs are also reduced. Further, the greatly simplified construction of the steam introduction to the infusion chamber also greatly simplifies the control of the infusion chamber since only a single steam flow has to be controlled according to the desired process conditions (temperature in chamber and/or product, required amount of steam) depending on the nature and/or flow of the product to be heated in the infusion chamber. Another important effect of suspending the infusion nozzle system lower in the chamber is that there is less interference with the infusion process and the steam entry which means that the infusion chamber will also work more efficient as a separator of air. Thereby, evacuation of air may be ensured at lower energy losses as less steam is lost in the process through an air outlet as discussed further below.

The infusion system for heating a liquid or semi liquid food product by direct contact with steam includes an infusion chamber limited by an infusion tank. The infusion tank comprises a tank top and tank bottom part with a tank wall therebetween. The infusion tank is usually cylindrical, but may also be of oval or polygonal cross section, e.g. square rectangular, pentagonal, hexagonal, heptagonal, octagonal etc. The product inlet for the food product to be heated is in the upper area of the infusion chamber, and the product outlet for the heated food product is in its lower area. The bottom part of the infusion tank is usually funnel shaped to direct the heated product to the outlet at the bottom of the tank, such as the bottom end of the funnel shaped bottom.

The main heat transfer occurs between the steam supplied between the outside circumference of the freely falling product stream and the chamber side wall. This also reduces the risk of product adhering onto the inner wall and thus reduces the risk of burnt-on product on the inner wall of the infusion chamber. Thereby the frequency and/or time periods necessary for shut downs in order to clean the inner chamber walls are reduced significantly.

The ring-shaped product inlet inside the upper area of the infusion chamber is arranged to be suspended below the upper wall of the infusion chamber. By suspending the product inlet below the inner top wall of the infusion chamber, a passage between the top inner wall and the product inlet allows steam to pass freely between the chamber top and the suspended ring-shaped product inlet and into the space surrounded by the falling product flow, as also discussed further below.

Thereby, the heat transferred from steam to product is maintained at a high level, because the steam is in contact with the outside surface as well as the inside surface of the freely falling product stream even though steam only enters the infusion chamber at the outer circumference of the falling product flow. Thus, the product inlet construction enables that a single steam inlet passage can be used, since there is no longer need to actively supply a separate steam flow to the space surrounded by the freely falling product flow.

Preferably, said steam inlet opening or openings in the infusion chamber are dimensioned to support a laminar steam flow into and/or inside the infusion chamber.

Hereby is obtained that there are no or only very small disturbances of the product flow. A turbulent steam flow in the infusion chamber may "tear" droplets of product from the freely falling jets or curtain of product and allow droplets of product to adhere on the inner wall and possibly burn onto the hot surface.

Further, a turbulent steam flow inside the infusion chamber may cause "torn off" droplets to be suspended by the turbulent steam in the infusion chamber, causing increased residence time of the droplets giving risk of a burnt flavour in the product.

Further, a laminar flow or substantially laminar flow in the infusion chamber ensures that the injected steam passes above the suspended product nozzle and into the inner free space surrounded by the freely falling product flow.,

As mentioned above, the steam inlet opening(s) are arranged in the tank top or side of the outer wall of the infusion chamber above and/or around the ring-shaped product outlet. This steam inlet opening or openings in the infusion are preferably provided as a number of openings, such as 3, 4, 5, 6, 7, 8 or more. These openings are equally distributed around the ring-shaped nozzle. Alternatively, said steam inlet opening is provided as a single ring-shaped opening which surrounds the ring-shaped nozzle.

These alternative steam inlet layouts both ensure even distribution of steam in the infusion chamber in order to optimize the contact area between steam and the falling product stream. Thereby the heat transfer to the product is also optimized.

The steam infusion system comprises a single valve which is arranged in the steam inlet passage to control the flow of steam to the steam inlet or inlets into the infusion chamber. This greatly simplifies control of the steam injection into the infusion chamber, since the single valve controls the heat input into the infusion chamber by controlling the amount of steam injected into the infusion chamber. Further, a less complex system is provided and therefore the production costs as well as service, repair and/or maintenance are kept at a minimum.

The liquid or semi liquid product is introduced into the infusion chamber through said ring-shaped product inlet. The ring-shaped product inlet is suspended below the inner wall of the tank top. The ring-shaped product inlet is preferably a ring-like shaped pipe member with one or more product inlets and with one or more nozzles arranged at the lowermost side thereof to provide a downward freely falling flow of the product to be heated. The downward flowing product surrounds fully or partly an inner free space, at the centre of the infusion chamber.

By suspending the product inlet below the top wall, a passage between the inside of the top wall of the tank and above the product inlet is provided. This passage allows steam to pass freely from the steam inlet(s) and into the central free space without having to travel through the "ring" of the freely falling product which is released from the nozzle(s). Hereby the product flow can be heated by contact with steam from both sides, without disturbance from the steam. The steam provided to the infusion chamber at the radially outer side of the product flow will thus be responsible for all or most of the heat transfer to the product flow, and the rest will enter the product on the radially inner side in an auto-adaptive optimization process.

The product inlet is described above as ring-shaped. This may, as implied, include a circular or annular product inlet with a ring member that is a closed ring or an open ring. By an open ring is meant a pipe where the two ends are sealed and do not meet to form a closed ring. The ring-shaped product inlet is not necessarily circular; it may also be oval or polygonal. A polygonal ring like member is e.g. formed of a number of straight pipe pieces which are joined together in angles to form the polygonal shape. By polygonal is meant an open or closed ring with 3,4,5,6,7,8 or more sides formed of pipe pieces.

The said ring-shaped product inlet is optionally provided with insulating or a cooling means. The cooling means are e.g. cooling channels or double walled pipes/walls of the nozzle pipe member. The double walled pipe member may form a cooling jacket of means to provide cooling air to or near the nozzle(s), e.g. through an air outlet gap near the nozzle(s).

The cooling means protects at least part of the pipe member of the product inlet from heat exposure from the surrounding steam in the infusion chamber. This reduces the risk of the product inlet being blocked e.g. at the nozzles and/or by product burnt-on/adhering to the inner side of the pipe member as a result of the heat exposure from the outside of the pipe.

The suspended ring-shaped pipe member of the product inlet may be divided into subsections. Typically, 2, 3, 4 or more subsections, each with its own product supply, are provided. Hereby it is possible to provide a simple product capacity adjustment simply by adjusting the product inflow by selecting a number of subsections to which the product is supplied. In addition, it is possible to provide different products to separate subsections of the product inlet nozzle(s). These products will then be mixed to form a single product flow when flowing out of the infusion chamber's outlet.

The product inlet comprises one or more nozzles in the product inlet pipe. The nozzle may e.g. form a ring-shaped slit, optionally divided into subsections, i.e. with a nozzle forming part of the ring in each of the subsections of the product inlet.

Alternatively, the nozzle(s) may be formed by one or more rows of radial slits or with slits which are angled relative to radial position.

The ring-shaped nozzle or nozzle slits are preferred when heating products that contains particulates, pulp and/or fibres as e.g. may be the case in liquid food products based on fruits and/or vegetables, such as juices

Alternatively, the nozzle(s) may be provided as one or more rows of circular, oval or polygonal holes.

The nozzle release angle is preferably made so that the freely falling product converges towards the center of the infusion chamber shortly before the exit thereof.

An air outlet is preferably provided at the top end of the infusion chamber, such as one or more central air outlet(s) in the top wall and/or through one or more air outlet(s) along or near the uppermost end of the infusion chamber's outer wall or outer area of the tank top. This air outlet can withdraw any air and/or other gasses released from the product during the passage down through the infusion chamber while being heated. Gasses that are released from the product may occupy an increasing volume of the infusion chamber unless they are withdrawn from the infusion chamber. An increasing amount of released gasses present in the infusion chamber will reduce the partial pressure of steam in the infusion chamber. This will decrease the heat transfer from steam to the product and result in an overall reduced efficiency of the infusion system unless these gasses are withdrawn.

The suspended product inlet nozzle also allows the gasses to be withdrawn via an air/gas outlet arranged centrally at the top of the infusion chamber.

The above mentioned objects area also met by a method for heating a liquid or semi liquid food product in an infusion system with an infusion chamber, to which the food product to be heated is supplied in the upper area, and from which the heated food product is discharged in the lower area, where the food product to be heated enters the infusion chamber and flows down through the infusion chamber as a freely falling downward flow, and where steam is supplied to the upper area of the infusion chamber, and where the steam is in direct heat exchange with the product steam, wherein - the food product is supplied to the infusion chamber as a ring-shaped product flow from the suspended ring-shaped product inlet inside the upper area of the infusion - introducing said steam into the infusion chamber through a single steam inlet passage which provides steam into the infusion chamber via one or more steam inlet openings in the top wall of the infusion chamber, and said steam inlet opening or openings in the infusion chamber top surrounds the ring-shaped product inlet and are arranged between the suspended ring-shaped product outlet and the outer wall of the infusion chamber.

The method includes that steam preferably is distributed passively to the area inside the ring-shaped product flow by passing between the suspended ring-shaped product inlet and the top wall of the infusion chamber. Thereby, the product is also heated by steam contact at the radially inner surface area of the freely falling product. See also the discussion thereof further above.

The method further includes that the heat input is controlled by a single valve controlling the steam flow into the infusion chamber as also discussed further above in relation to the description of the infusion system.

Preferably, the method includes that steam flow into the infusion chamber is laminar as also discussed further above in relation to the description of the infusion system.

The food product may be supplied to the infusion chamber as jets, droplets and/or as a ring-shaped liquid curtain. The product flow depends on the construction of the nozzles on the product inlet and the flow of the product to be heated.

The method further includes that air is withdrawn from the infusion chamber at the top end thereof, in particular through central air outlet(s) in the top wall and/or along or near the uppermost end of the infusion chamber's outer wall or outer area of the tank top as also discussed further above in relation to the description of the infusion system. This provides as little as 5% (by volume) or lower, e.g. 1-3 % (by volume) of air in the infusion chamber.

The method is preferably applied as heat treatment of the liquid or semi liquid food product in a pasteurisation treatment, an extended shelf life heat treatment (ESL) or a ultra-high temperature treatment (UHT).

Each of these heat treatments are defined by the temperatures to which the products are heated and the time applied for the heating of the products cf. the definitions given in the background section.

Prior to being introduced into the infusion chamber, the steam can be generated with the required temperature/pressure and be controlled with a regulation valve for steam. It can also be heated to the temperatures needed during the relevant heat treatment in a steam generator. The temperatures to obtain these resulting heated (product) temperatures depend on whether the heating is to obtain pasteurisation of the product; ESL heat treatment or UHT heat treatment.

In the method it is preferred that the steam is saturated steam (at the prescribed temperature and pressure applied in the infusion chamber during the heat treatment) or at least the steam is close to the saturation point, e.g. the steam contains at least 90% (by volume) or preferably at the least 95% by volume or at best above 97% by volume of the possible content of water vapour at the prescribed temperature and pressure used for the relevant heat treatment. This is preferred in order to minimize evaporation of water from the liquid product and to optimize heat transfer from the steam to the product. This is also described further above (in the background section). The pressure varies depending on the heat treatment and may e.g. be close to atmospheric pressure during pasteurisation and up to e.g. 3 bar during UHT, while during ESL heat treatment the pressure is usually a little lower than at UHT heat treatment.

The present invention also relates to use of an infusion system as described above or below and/or a method as described further above or below for providing a pasteurisation, an extended shelf life heat treatment (ESL) or a ultra-high temperature treatment (UHT) of a liquid or semi liquid food product, such as dairy products, such as milk, cream and/or yoghurt or similar fermented milk or cream based products, whey or liquid or semi liquid food products based on whey; milk based liquid or semi liquid desserts; fruit and/or vegetable-based products, juice from fruit and/or vegetables, vegetable based milk substitutes, such as milk substitutes based on soy, oat, nuts, almonds and/or mixtures thereof, drinks of any kind, e.g. beer, soft drinks, as wells as culinary products such as soups, stews, broth, gravies, dressings, honey, desserts, such as puddings, and/or condiments.

### Description of the Drawing

The present invention will be described in details below with reference to the drawings in which
- Fig. 1: shows a vertical cross section of the steam infusion apparatus
- Fig. 2: shows a perspective view of the outside of the top section of the steam infusion apparatus
- Fig. 3: shows a perspective view of the inside of the top section of the steam infusion apparatus
- Fig. 4: shows a first sideview of the top section of the steam infusion apparatus
- Fig. 5: shows a cross sectional view of the top section of the steam infusion apparatus through line A-A shown in figs. 6-7
- Fig. 6: shows a second sideview of the top section of the steam infusion apparatus (perpendicularly to side view in fig. 4)
- Fig.7: shows a cross sectional view of the top section of the steam infusion apparatus through line B-B shown in figs. 4-5, and
- Fig. 8a-d: show various possible nozzle designs for the product inlet.

The same items bear the same reference signs on all figures. Thus, each single feature is not necessarily discussed in relation to every single figure.

### Detailed Description of the Invention

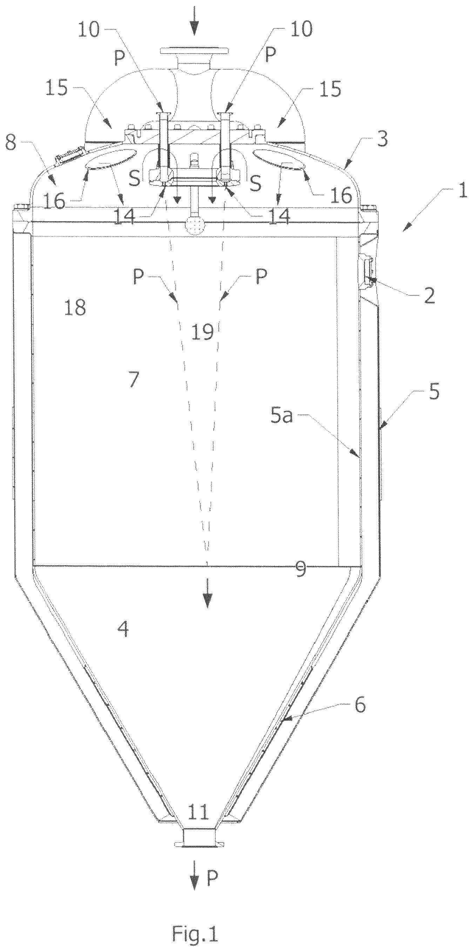

Fig. 1 shows a vertical cross sectional view of an infusion system 1 according to the present invention, which is primarily intended for pasteurisation, ESL treatment or UHT treatment of liquid or semi liquid food products P.

The infusion system 1 has a tank 2 with a top 3, a bottom 4 and a tank wall 5. The product P is led into the infusion chamber 7 at the top 8 where the atmosphere is made up of saturated steam (or steam close to the saturation point) which is maintained at a given pressure and temperature. Saturated steam (or steam close to the saturation point) is fed to the infusion chamber through a steam inlet passage 15 and into the infusion chamber via steam inlet openings 16 in order to maintain the desired temperature in the infusion chamber, so as to ensure the desired heat transfer to provide pasteurisation, ESL treatment or UHT treatment. The number of steam inlet openings 14 shown on the drawings (four openings 16 are drawn) is illustrative only. The top part 3 of the infusion tank is e.g. attached to the walls by flange members 20 and attachment means e.g. bolts and nuts.

The product P is led into the infusion chamber 7 through a product inlet 10. The product inlet 10 comprises a product inlet passage 12 and a ring-shaped pipe member 13 (ring shape is optional and may be another shape as discussed above). The pipe member 13 has a number of nozzle openings 14 at the lowermost side of the pipe 13.

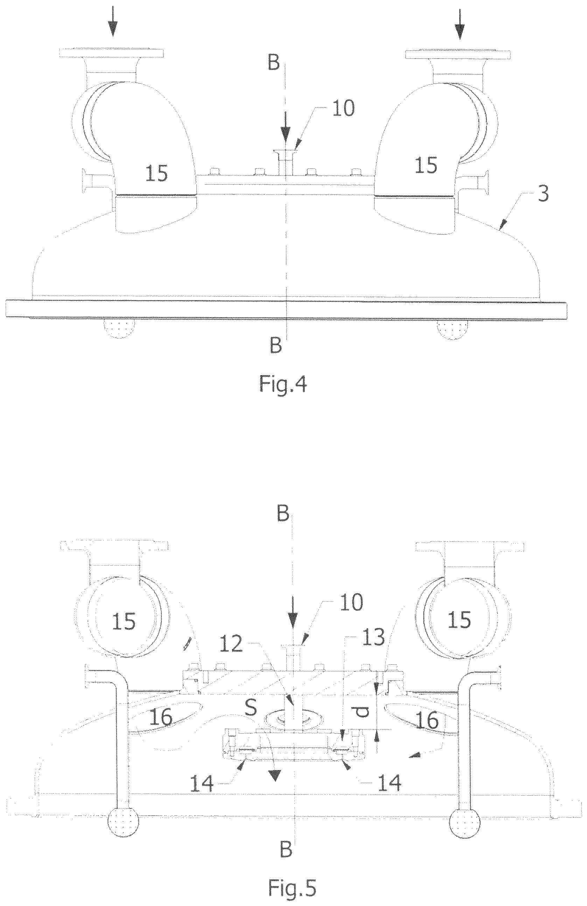

The product inlet pipe 14 with nozzles 14 (for illustrative purposes shown as being ring-shaped in the figures) is arranged inside the upper area 8 of the infusion chamber. The product inlet pipe 13 is arranged to be suspended below the tank top/upper wall 3 of the infusion chamber 7. By suspending the product inlet below the inner top wall of the infusion chamber 7, the passage d between the top inner wall and the product inlet allows steam to pass freely between the chamber top 3 and the suspended product inlet pipe 13 as shown with arrow S in figs. 1, 3, 5 and 7. Thereby the steam is allowed to pass into the space 19 (see fig 1) surrounded by the falling product flow.

The nozzles 14 and/or the product pipe 13 can be insulated from the heat-exposure in the infusion chamber 7, e.g. by cooling channels in the pipe 13, near the nozzles 14, the double walled pipes 13 or by providing an air nozzle near the nozzles 14 to expel cooling air (none of these are shown in figs.).

The product P falls freely down through the infusion chamber 7 and is heated by the steam condensing into the product, thereby elevating the temperature to the desired level in accordance with a set point. The set point depends on whether it is intended to heat the product for pasteurisation, ESL or UHT treatment as discussed further above.

The nozzles are designed to make the ring-shaped curtain/jets/droplets of product P converge shortly before the entry into the exit 11 as illustrated by the dotted lines P in fig. 1.

An air outlet 17 is provided at the top of the infusion chamber 7. The air outlet is not shown in figs. 1-7 but the arrow 17 illustrates that the air outlet is e.g. provided centrally at the infusion tank top 3.

The product P falls through the chamber with limited or no contact with the inside of the chamber wall 5a while it is being heated by the condensing steam (the infusion process). The product P is removed through an outlet 11 placed in the bottom of the infusion chamber 7.

The bottom part 4 of the infusion tank 2 may be funnel-shaped so as to guide the product P to the outlet 11. The bottom part 4 of the infusion tank 2 may be equipped with cooling means 6. In fig. 1 a cooling jacket 6 is shown for illustrative purposes covering the lower part 9 of the infusion chamber 7. The cooling means 6 also ensures that the funnel-shaped part 4 is cold enough to avoid product burnt on the inside of the funnel shaped wall 4.

The steam enters the upper area 8 of the infusion chamber 7 via a steam inlet passage 15. The flow of steam into the steam inlet passage 15 is regulated by a single (not shown) valve. Steam enters the infusion chamber 7 through a number of steam injection openings 16. The steam inlet passage 15 is divided into a number of sub-streams corresponding to the number of steam inlet openings 16. In figs. 1-7 four steam inlets are shown as a non-limiting example of the number of steam inlets openings.

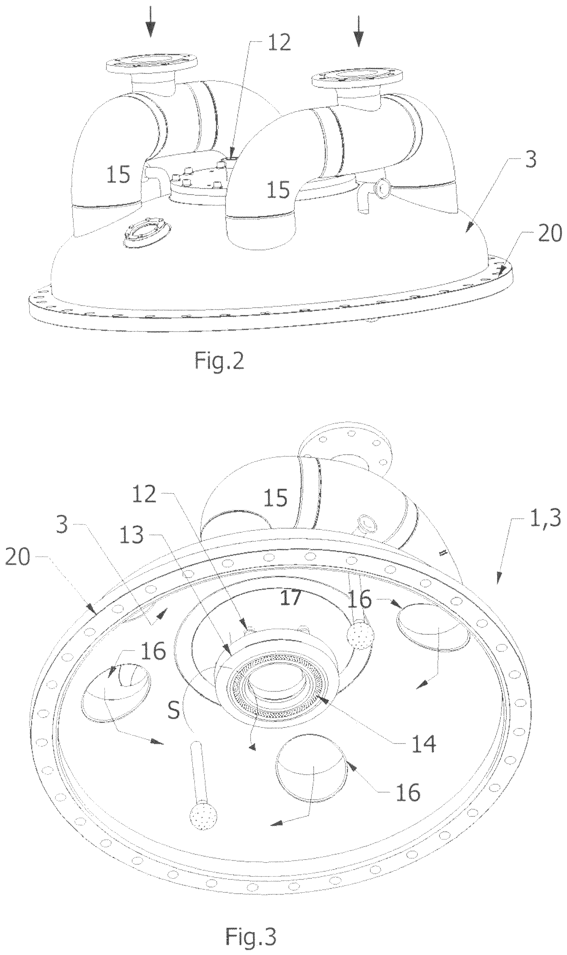

The steam inlet openings 16 are arranged to enter the space 18 radially outside the freely falling product flow P. In Fig. 3 three out of four equally spaced steam inlet openings 16 are visible. As seen in fig. 3 the steam inlet openings 16 are evenly spaced to surround the product flow P. The steam inlet openings 16 are large enough to support a laminar steam flow inside and/or into the infusion chamber 7 as discussed above.

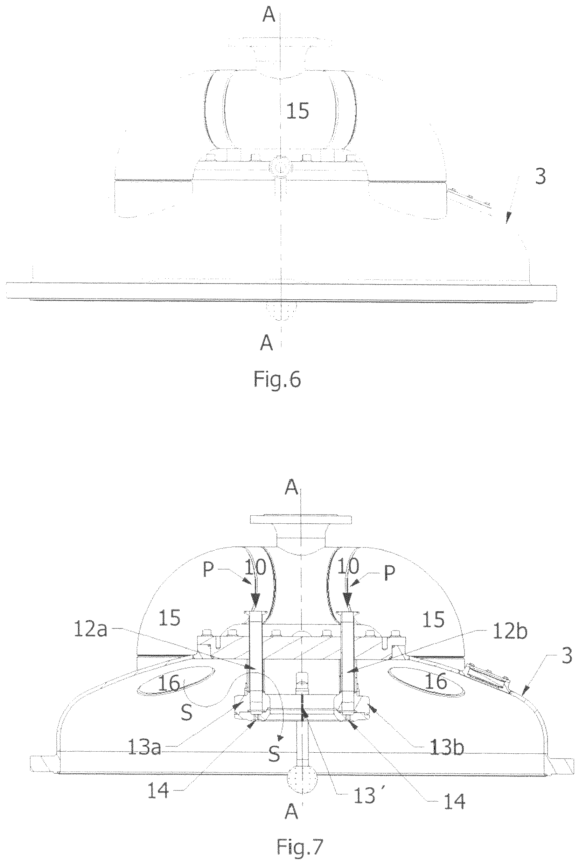

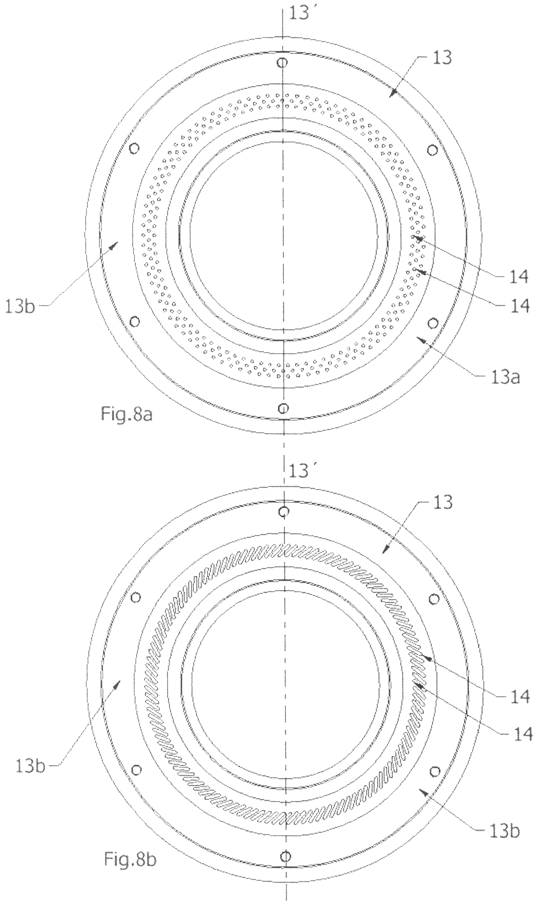

In figs. 1-5 the product inlet pipe 13 comprises two product inlet passages 12. This is because the suspended pipe member 13 of the product inlet may be divided into separated subsections 13a, 13b (illustrated at figs. 8a-8c). In the present case two subsections 13a, 13b are used. Each sub-section 13a, 13b is provided with the product through its own product inlet passage 12a, 12b as illustrated in fig. 7. Typically, 2, 3, 4 or more subsections, each with its own product supply 12a, 12b, are provided.

Figs. 8a-8c shows the product inlet pipe 13 in a circular variant as seen from the bottom. The product inlet 10 comprises one or more nozzles 14 in the product inlet pipe 13.

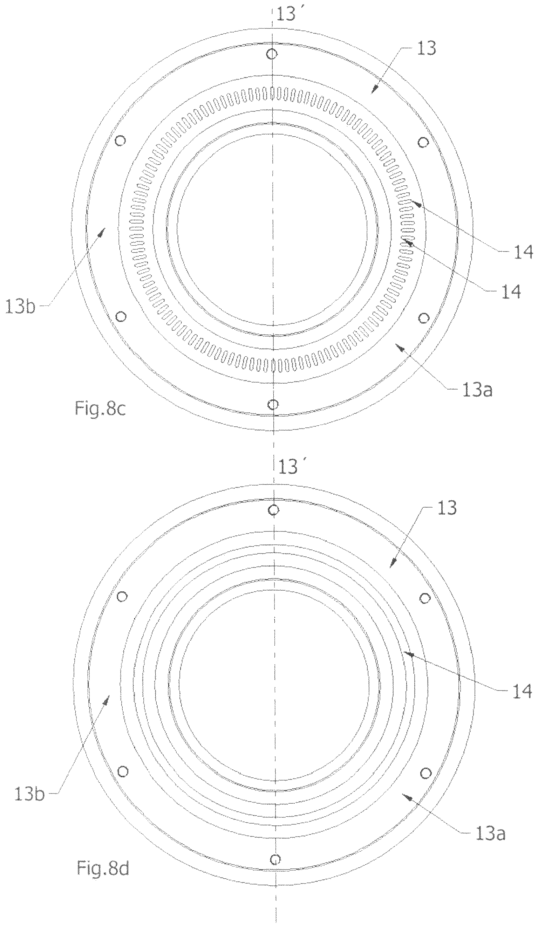

The nozzle 14 may e.g. form a ring-shaped slit (fig8d.), optionally divided into subsections, i.e. with a nozzle 14 forming part of the ring in each of the subsections of the product inlet.

Alternatively, the nozzle(s) 14 may be formed by one or more rows of radial slits 14 ( fig. 8c) or with slits 14 which are angled relative to radial position (fig. 8b).

The ring-shaped nozzle or nozzle slits are preferred when heating products that contains particulates, pulp and/or fibres as e.g. may be the case in liquid food products based on fruits and/or vegetables, such as juices

Alternatively, the nozzle(s) 14 may be provided as one or more rows of circular, oval or polygonal holes as shown in fig. 8a.

### Reference numbers

1. infusion system
2. infusion tank
3. infusion tank top
4. infusion tank bottom
5. infusion tank wall
   a. inner side of tank wall
6. cooling jacket
7. infusion chamber
8. infusion chamber upper area
9. infusion chamber lower area
10. product inlet,
11. Product outlet
12. product inlet passage
13. product inlet pipe
14. nozzle
15. Steam inlet passage
16. steam inlet openings
17. air outlet
18. space radially outside product flow
19. central space/space radially inside product flow
20. flange

## Claims

1. Infusion system for heating a liquid or semi liquid food product by direct contact with steam, including an infusion chamber limited by an infusion tank, said infusion chamber having a product inlet for the food product to be heated in its upper area and a product outlet for the heated food product in its lower area, and where said product is provided through a ring-shaped product inlet as a ring-shaped shaped product stream falling freely down through the infusion chamber, said infusion system having a steam inlet for the steam heating medium in the upper area, wherein
- said ring-shaped product inlet inside the upper area of the infusion chamber is arranged to be suspended below the upper wall of the infusion chamber,
- said steam inlet is provided as a single steam inlet passage which provides steam into the infusion chamber via one or more steam inlet openings, which are arranged in the tank top or side of the outer wall of the infusion chamber above and/or around the ring-shaped product outlet of the infusion chamber, and said steam inlet opening or openings in the infusion chamber top surrounds the ring-shaped product inlet and are arranged between the ring-shaped product outlet and the outer wall of the infusion chamber.

2. Infusion system according to claim 1, **characterized in that** said steam inlet opening or openings in the infusion are dimensioned to provide a laminar steam flow inside and/or into the infusion chamber.

3. Infusion system according to claim 1 or 2, **characterized in that** the steam inlet opening or openings in the infusion are provided as a number of openings, such as 3, 4, 5, 6, 7, 8 or more, which are equally distributed around the ring-shaped nozzle or said steam inlet opening is provided as a single ring-shaped opening which surrounds the ring-shaped nozzle.

4. Infusion system according to any of claims 1 to 3, **characterized in that** a single valve is arranged in the steam inlet passage to control the flow of steam to the steam inlet or inlets into the infusion chamber.

5. Infusion system according to any of the preceding claims, **characterized in that** said ring-shaped product inlet is provided as a suspended ring-shaped pipe member with one or more product inlets and with one or more nozzles arranged at the lowermost side thereof, where said ring-shaped product inlet is optionally provided with insulating or cooling means.

6. Infusion system according to claim 5, **characterized in that** the suspended ring-shaped pipe member is divided into 2, 3, 4 or more subsections, each with its own product supply.

7. Infusion system according to any of the preceding claims, **characterized in that** the one or more nozzles in the product inlet pipe form a ring-shaped slit, optionally divided into subsections, or one or more rows of radial slits or with the slits being angled relative to radial position or the nozzles are provided as one or more rows of circular, oval or polygonal holes.

8. Infusion system according to any of the preceding claims, **characterized in that** an air outlet is provided at the top end of the infusion chamber, such as one or more central air outlet(s) in the top wall and/or through one or more air outlet(s) along or near the uppermost end of the infusion chamber's outer wall or outer area of the tank top.

9. A method for heating a liquid or semi liquid food product in an infusion system with an infusion chamber to which the food product to be heated is supplied in the upper area, and from which the heated food product is discharged in the lower area, where the food product to be heated enters the infusion chamber and flows down through the infusion chamber as a freely falling downward flow, and where steam is supplied to the upper area of the infusion chamber and where the steam is in direct heat exchange with the product steam, wherein
- the food product is supplied to the infusion chamber as an ring-shaped product flow from the suspended ring-shaped product inlet inside the upper area of the infusion
- introducing said steam into the infusion chamber through a single steam inlet passage which provides steam into the infusion chamber via one or more steam inlet openings arranged in the tank top or side of the outer wall of the infusion chamber above and/or around the ring-shaped product outlet of the infusion chamber, and said steam inlet opening or openings in the infusion chamber top surrounds the ring-shaped product inlet and are arranged between the suspended ring-shaped product outlet and the outer wall of the infusion chamber.

10. A method according to claim 9, **characterized in that** steam is distributed passively to the area inside the ring-shaped product flow by passing between the suspended ring-shaped product inlet and the top wall of the infusion chamber.

11. A method according to claim 9 or 10, **characterized in that** the heat input is controlled by a single valve controlling the steam flow into the infusion chamber.

12. A method according to any of the preceding claims 9-11, **characterized in that** the steam flow into the infusion chamber is laminar.

13. A method according to any of the preceding claims 9-12, **characterized in that** the food product is supplied to the infusion chamber as droplets jets and/or as a circular liquid curtain.

14. A method according to any of the preceding claims 9-13, **characterized in that** air is withdrawn from the infusion chamber at the top end thereof, in particular through a central air outlet in the top wall and/or along one or more air outlets at the uppermost end of the infusion chamber's outer wall.

15. A method according to any of the preceding claims 9-13, **characterized in that** the heat treatment of the liquid or semi liquid food product is a pasteurisation, an extended shelf life heat treatment (ESL) or an ultra-high temperature treatment (UHT).

16. Use of an infusion system according to any of claims 1-8 and/or a method according to any of claims 9-15 for providing a pasteurisation, an extended shelf life heat treatment (ESL) or an ultra-high temperature treatment (UHT) of a liquid or semi liquid food product, such as dairy products, such as milk, cream and/or yoghurt or similar fermented milk or cream based products; whey or liquid or semi liquid food products based on whey; milk based liquid or semi liquid desserts; fruit and/or vegetable-based products, juice from fruit and/or vegetables, vegetable based milk substitutes, such as milk substitutes based on soy, oat, nuts, almonds and/or mixtures thereof, drinks of any kind, e.g. beer, wine, soft drinks, as wells as culinary products such as soups, stews, broth, gravies, dressings, honey, desserts, such as puddings, and/or condiments.
